# EUROPEAN PATENT APPLICATION

(11) **EP 4 776 678 A1**
(43) Date of publication of application: **15.07.2026**
(21) Application number: 24870748.1
(22) Date of filing: 25.09.2024
(51) Int. Cl.: H04W 24/02

(54) **COMMUNICATION METHOD AND COMMUNICATION APPARATUS**

(30) Priority: 28.09.2023 CN 202311294143
(71) Applicant: HUAWEI TECHNOLOGIES CO., LTD., Shenzhen 518129 (CN)
(72) Inventor: YANG, Rui, Shenzhen, Guangdong 518129 (CN); QIN, Cheng, Shenzhen, Guangdong 518129 (CN); WANG, Sihai, Shenzhen, Guangdong 518129 (CN)
(74) Representative: Gill Jennings & Every LLP
(86) International application number: PCT/CN2024/120944
(87) International publication number: WO 2025/067204

(57) **Abstract**

This application provides a communication method and a communication apparatus. The method includes: A terminal receives first information, where the first information is used to configure the terminal to measure signal quality of a first cell, the first cell is a neighboring cell of a serving cell of the terminal, the first information includes first indication information, and the first indication information indicates an effective time period for the terminal to measure the signal quality of the first cell. The terminal measures the signal quality of the first cell within the effective time period, to obtain a first measurement result. The terminal sends the first measurement result when the first measurement result meets a measurement reporting condition. This can reduce power consumption of the terminal and improve efficiency of measuring signal quality of the neighboring cell.

## Description

This application claims priority to Chinese Patent Application No. 202311294143.3, filed with the China National Intellectual Property Administration on September 28, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In a mobile communication system, a network device sends measurement configuration information to a terminal served by the network device, and the terminal may measure signal quality of an adjacent cell (also referred to as a neighboring cell) of a serving cell of the terminal based on the measurement configuration information. The terminal may report a measurement result to the network device, so that the network device can determine, based on the measurement result of the neighboring cell reported by the terminal, whether to hand over the terminal to a neighboring cell with high signal quality. This can maintain communication continuity when the terminal moves.

However, in a current mechanism for measuring signal quality of a neighboring cell, there are problems of ineffective measurement and high power consumption of a terminal.

### SUMMARY

Embodiments of this application provide a communication method and a communication apparatus, to reduce power consumption of a terminal and improve efficiency of measuring signal quality of a neighboring cell.

According to a first aspect, a communication method is provided. The method may be performed by a terminal or a module (for example, a chip) configured in (or used in) the terminal.

The method includes: receiving first information, where the first information is used to configure the terminal to measure signal quality of a first cell, the first cell is a neighboring cell of a serving cell of the terminal, the first information includes first indication information, and the first indication information indicates an effective time period for the terminal to measure the signal quality of the first cell; measuring the signal quality of the first cell within the effective time period, to obtain a first measurement result; and sending the first measurement result when the first measurement result meets a measurement reporting condition.

According to the foregoing solution, a network device may notify the terminal of the effective time period of measurement configuration, and the terminal may temporarily not measure signal quality of the neighboring cell after receiving measurement configuration information, but measure the signal quality within the effective time period. This can reduce power consumption of the terminal and improve efficiency of measuring the signal quality of the neighboring cell.

With reference to the first aspect, in some implementations of the first aspect, the first indication information indicates a correspondence between a plurality of speeds and a plurality of candidate time periods, and the method further includes: determining the effective time period based on a speed of the terminal and the correspondence, where the effective time period is a candidate time period that corresponds to the speed of the terminal and that is in the plurality of candidate time periods.

According to the foregoing solution, a network device may provide the terminal with candidate time periods, for measurement, that correspond to different speeds, so that the terminal can determine, based on the speed of the terminal, the effective time period for measuring the first cell. In this way, the effective time period that matches the speed of the terminal is obtained accurately, to reduce power consumption of the terminal and improve efficiency of measuring the signal quality of the neighboring cell.

With reference to the first aspect, in some implementations of the first aspect, the first indication information indicates a start time unit of the effective time period and a quantity of time units included in the effective time period; or the first indication information indicates a quantity N of time units, the start time unit of the effective time period is a time unit after the N time units starting from a time unit that carries the first information, and N is a positive integer.

According to the foregoing solution, a network device and the terminal may reach a consensus on an indication manner of the first indication information, so that the terminal can accurately determine the effective time period for measuring the first cell.

With reference to the first aspect, in some implementations of the first aspect, the first information is specifically used to configure the terminal to measure signal quality of at least one neighboring cell of the serving cell, the at least one neighboring cell includes the first cell, and the effective time period is a common effective time period for the terminal to measure the signal quality of the at least one neighboring cell.

According to the foregoing solution, the first information is specifically used to configure the common effective time period of the at least one neighboring cell that needs to be measured, to reduce signaling overheads.

With reference to the first aspect, in some implementations of the first aspect, the first information includes at least one piece of measurement object information, the at least one piece of measurement object information indicates at least one neighboring cell of the serving cell, the at least one neighboring cell includes the first cell, and the first indication information is specifically included in measurement object information indicating the first cell.

According to the foregoing solution, the first information may be separately used to configure an effective time period corresponding to a neighboring cell that needs to be measured, so that the terminal can accurately determine an effective time period for measuring each neighboring cell.

With reference to the first aspect, in some implementations of the first aspect, the at least one neighboring cell further includes a second cell, and the method further includes: sending second information, where the second information indicates that the second cell does not meet the measurement reporting condition.

According to the foregoing solution, the terminal may report a cell that does not meet the measurement reporting condition, so that a network device can consider, based on the second information, that accuracy of an effective time period, for measurement, that corresponds to the second cell and that is obtained by an intelligent model through inference is low, and the network device may update a model parameter of the intelligent model based on the second information, to improve accuracy of the effective time period that corresponds to the neighboring cell and that is obtained by the intelligent model through inference.

With reference to the first aspect, in some implementations of the first aspect, the second information indicates that the terminal does not obtain, through measurement, signal quality of the second cell within an effective time period corresponding to the second cell; or the second information indicates a second measurement result, and the second measurement result includes the signal quality of the second cell that is obtained by the terminal through measurement.

With reference to the first aspect, in some implementations of the first aspect, the first measurement result further includes one or more of time information, speed information, or location information used when the terminal measures the signal quality of the first cell.

According to a second aspect, a communication method is provided. The method may be performed by a network device or a module (for example, a chip) configured in (or used in) the network device.

The method includes: sending first information, where the first information is used to configure a terminal to measure signal quality of a first cell, the first cell is a neighboring cell of a serving cell of the terminal, the first information includes first indication information, and the first indication information indicates an effective time period for the terminal to measure the signal quality of the first cell; and receiving a first measurement result, where the first measurement result includes the signal quality of the first cell that is obtained by the terminal through measurement.

With reference to the second aspect, in some implementations of the second aspect, the first indication information indicates a correspondence between a plurality of speeds and a plurality of candidate time periods, and the plurality of candidate time periods include the effective time period corresponding to a speed of the terminal.

With reference to the second aspect, in some implementations of the second aspect, the first indication information indicates a start time unit of the effective time period and a quantity of time units included in the effective time period; or the first indication information indicates a quantity N of time units, the start time unit of the effective time period is a time unit after the N time units starting from a time unit that carries the first information, and N is a positive integer.

With reference to the second aspect, in some implementations of the second aspect, the first information is specifically used to configure the terminal to measure signal quality of at least one neighboring cell of the serving cell, the at least one neighboring cell includes the first cell, and the effective time period is a common effective time period for the terminal to measure the signal quality of the at least one neighboring cell.

With reference to the second aspect, in some implementations of the second aspect, the first information includes at least one piece of measurement object information, the at least one piece of measurement object information indicates at least one neighboring cell of the serving cell, the at least one neighboring cell includes the first cell, and the first indication information is specifically included in measurement object information indicating the first cell.

With reference to the second aspect, in some implementations of the second aspect, the method further includes: inputting information about the terminal into an intelligent model, to obtain the effective time period, output by the intelligent model, for the terminal to measure the at least one neighboring cell, where the information about the terminal includes one or more of location information, movement direction information, or speed information of the terminal.

With reference to the second aspect, in some implementations of the second aspect, the at least one neighboring cell includes a second cell, and the method further includes: receiving second information from the terminal, where the second information indicates that the second cell does not meet a measurement reporting condition; and updating a model parameter of the intelligent model based on the second information.

With reference to the second aspect, in some implementations of the second aspect, the second information indicates that the terminal does not obtain, through measurement, signal quality of the second cell within an effective time period corresponding to the second cell; or the second information indicates a second measurement result, and the second measurement result includes the signal quality of the second cell that is obtained by the terminal through measurement.

With reference to the second aspect, in some implementations of the second aspect, the first measurement result further includes one or more of time information, speed information, or location information used when the terminal measures the signal quality of the first cell; and the method further includes: updating the model parameter of the intelligent model based on the first measurement result, where the intelligent model is used to infer an effective time period for the terminal to measure the neighboring cell of the serving cell.

According to a third aspect, a communication apparatus is provided. In a design, the apparatus may include a module that is in one-to-one correspondence with the method/operation/step/action described in any one of the first aspect or the implementations of the first aspect. The module may be implemented by a hardware circuit, software, or a combination of the hardware circuit and the software. In a design, the apparatus includes: a transceiver unit, configured to receive first information, where the first information is used to configure a terminal to measure signal quality of a first cell, the first cell is a neighboring cell of a serving cell of the terminal, the first information includes first indication information, and the first indication information indicates an effective time period for the terminal to measure the signal quality of the first cell; and a processing unit, configured to measure the signal quality of the first cell within the effective time period, to obtain a first measurement result. The transceiver unit is configured to send the first measurement result when the first measurement result meets a measurement reporting condition.

According to a fourth aspect, a communication apparatus is provided. In a design, the apparatus may include a module that is in one-to-one correspondence with the method/operation/step/action described in any one of the second aspect or the implementations of the second aspect. The module may be implemented by a hardware circuit, software, or a combination of the hardware circuit and the software. In a design, the apparatus includes: a processing unit, configured to determine first information, where the first information is used to configure a terminal to measure signal quality of a first cell, the first cell is a neighboring cell of a serving cell of the terminal, the first information includes first indication information, and the first indication information indicates an effective time period for the terminal to measure the signal quality of the first cell; and a transceiver unit, configured to send the first information. The transceiver unit is further configured to receive a first measurement result, where the first measurement result includes the signal quality of the first cell that is obtained by the terminal through measurement.

According to a fifth aspect, a communication apparatus is provided, and includes a processor. The processor may implement the method according to any one of the first aspect, the second aspect, and the possible implementations of the first aspect and the second aspect. Optionally, the communication apparatus further includes a memory. The processor is coupled to the memory, and may be configured to execute instructions in the memory, to implement the method according to any one of the first aspect, the second aspect, and the possible implementations of the first aspect and the second aspect. Optionally, the communication apparatus further includes a communication interface, and the processor is coupled to the communication interface. In embodiments of this application, the communication interface may be a transceiver, a pin, a circuit, a bus, a module, or another type of communication interface. This is not limited.

In an implementation, the communication apparatus is a communication device (for example, a terminal device or an access network device). When the communication apparatus is the communication device, the communication interface may be a transceiver or an input/output interface.

In another implementation, the communication apparatus is a chip configured in the communication device. When the communication apparatus is the chip configured in the communication device, the communication interface may be an input/output interface.

Optionally, the transceiver may be a transceiver circuit. Optionally, the input/output interface may be an input/output circuit.

According to a sixth aspect, a processor is provided, and includes an input circuit, an output circuit, and a processing circuit. The processing circuit is configured to: receive a signal through the input circuit, and transmit the signal through the output circuit, to cause the processor to perform the method according to any one of the first aspect, the second aspect, and the possible implementations of the first aspect and the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a seventh aspect, a computer program product is provided. The computer program product includes a computer program (which may also be referred to as code or instructions). When the computer program runs, a computer is caused to perform the method according to any one of the first aspect, the second aspect, and the possible implementations of the first aspect and the second aspect.

According to an eighth aspect, a computer-readable storage medium is provided. The computer-readable storage medium stores a computer program (which may also be referred to as code or instructions). When the computer program runs on a computer, the computer is caused to perform the method according to any one of the first aspect, the second aspect, and the possible implementations of the first aspect and the second aspect.

According to a ninth aspect, a communication system is provided, and includes a terminal that performs the method provided in any one of the first aspect and the possible implementations of the first aspect. The communication system further includes a network device that performs the method provided in any one of the second aspect or the possible implementations of the second aspect.

### BRIEF DESCRIPTION OF DRAWINGS

FIG. 1 is a diagram of an architecture of a communication system applicable to an embodiment of this application;
FIG. 2 is a measurement-based cell handover procedure according to this application;
FIG. 3 is a diagram of a scenario in which a mobility terminal measures a neighboring cell according to this application;
FIG. 4 is a schematic flowchart of a communication method according to an embodiment of this application;
FIG. 5 is a block diagram of an example of a communication apparatus according to an embodiment of this application; and
FIG. 6 is a diagram of a structure of another example of a communication apparatus according to an embodiment of this application.

### DESCRIPTION OF EMBODIMENTS

The following describes technical solutions of this application with reference to accompanying drawings.

In embodiments of this application, "/" may represent an "or" relationship between associated objects. For example, A/B may represent A or B. "And/or" may be used to describe three relationships between the associated objects. For example, A and/or B may represent the following three cases: Only A exists, both A and B exist, and only B exists, where A and B may be singular or plural. For ease of description of the technical solutions in embodiments of this application, terms such as "first" and "second" may be used for differentiation. The terms such as "first" and "second" do not limit a quantity and an execution sequence, and the terms such as "first" and "second" do not limit a definite difference. In embodiments of this application, a term like "example" or "for example" is used to represent an example, evidence, or a description. Any embodiment or design solution described as "example" or "for example" should not be explained as being more preferred or having more advantages than another embodiment or design solution. The term like "example" or "for example" is used to present a related concept in a specific manner for ease of understanding. In embodiments of this application, "at least one (type)" may alternatively be described as "one (type) or more (types)", and "a plurality of (types)" may be two (types), three (types), four (types), or more (types). This is not limited in this application.

The technical solutions in embodiments of this application may be applied to various communication systems, for example, a long term evolution (long term evolution, LTE) system, a 5th generation (5th generation, 5G) communication system, a wireless fidelity (wireless fidelity, Wi-Fi) system; and the communication method provided in this application may further be applied to a communication system that is evolved after 5G, for example, a 6th generation (6th generation, 6G) communication system, a future communication system, or another communication system. This is not limited in this application.

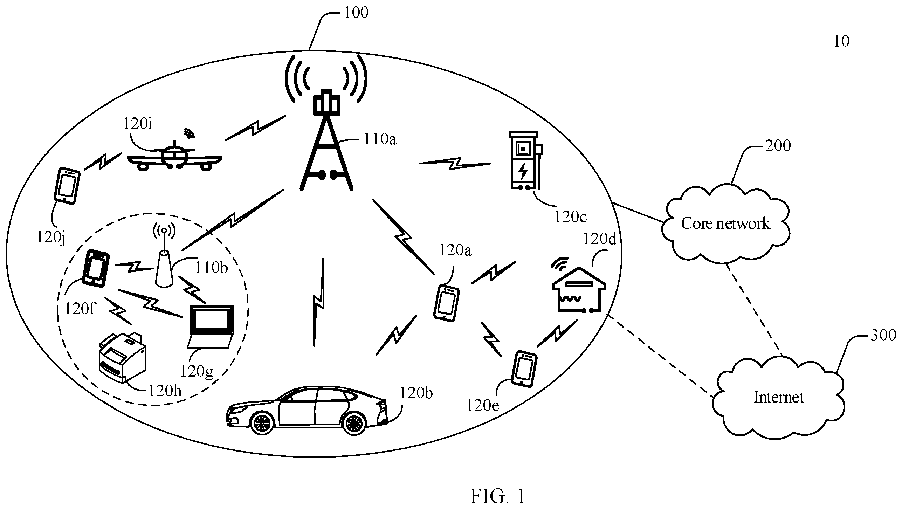

FIG. 1 is a diagram of a possible and non-limiting system. As shown in FIG. 1, a communication system 10 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The access network node (or referred to as a RAN node) 110 is connected to the core network 200 in a wireless or wired manner. A core network device in the core network 200 and the access network node 110 in the RAN 100 may respectively be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). Alternatively, the RAN 100 may be an open radio access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates the foregoing two or more systems.

The access network node 110 may also be sometimes referred to as an access network device, a RAN entity, an access node, or the like, and forms a part of the communication system, to help a terminal implement radio access. A plurality of access network nodes 110 in the communication system 10 may be nodes of a same type, or may be nodes of different types. In some scenarios, roles of the access network node 110 and the terminal 120 are relative. For example, a network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Both the access network node 110 and the terminal 120 are sometimes referred to as communication apparatuses. For example, network elements 110a and 110b in FIG. 1 may be understood as communication apparatuses having a base station function, and network elements 120a to 120j may be understood as communication apparatuses having a terminal function.

In a possible scenario, the access network node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6th generation (6th generation, 6G) mobile communication system, a base station in a future mobile communication system, an access node in a Wi-Fi system, or the like. The access network node may be a macro base station (for example, 110a in FIG. 1), a micro base station or an indoor station (for example, 110b in FIG. 1), a relay node or a donor node, or a radio controller in a CRAN scenario. Optionally, the access network node may alternatively be a server, a wearable device, a vehicle, a vehicle-mounted device, or the like. For example, an access network device in a vehicle to everything (vehicle to everything, V2X) technology may be a road side unit (road side unit, RSU). All or a part of functions of the access network node in this application may alternatively be implemented by using a software function running on hardware, or may be implemented by using an instantiated virtualization function on a platform (for example, a cloud platform). The access network node in this application may alternatively be a logical node, a logical module, or software that can implement all or a part of functions of the access network node.

In another possible scenario, a plurality of access network nodes coordinate to assist the terminal in implementing radio access, and different access network nodes separately implement a part of functions of the base station. For example, the access network node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna processing unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by a software module, a hardware module, or a combination of the software module and the hardware module.

A network device provided in embodiments of this application may be an access network node, or the network device may include one or more access network nodes.

The terminal provided in embodiments of this application may also be referred to as a terminal device, user equipment (user equipment, UE), a mobile station, a mobile terminal, or the like. The terminal may be widely used for communication in various scenarios. The scenarios include, but are not limited to, at least one of the following scenarios: enhanced mobile broadband (enhanced mobile broadband, eMBB), ultra-reliable low-latency communication (ultra-reliable low-latency communication, URLLC), massive machine-type communication (massive machine-type communication, mMTC), D2D, V2X, machine-type communication (machine-type communication, MTC), internet of things (internet of things, IOT), virtual reality, augmented reality, industrial control, self-driving, telemedicine, smart grid, smart furniture, smart office, smart wearable, smart transportation, sensing terminal, terminal with integrated sensing and communication, smart city, or the like. The terminal may be a mobile phone (for example, 120a, 120j, and 120e in FIG. 1), a tablet computer, a computer with a wireless transceiver function (for example, 120g in FIG. 1), customer-premises equipment (customer-premises equipment, CPE), a smart point of sale (point of sale, POS) machine, a wearable device, a vehicle (for example, 120b in FIG. 1), an uncrewed aerial vehicle, a helicopter, an airplane (for example, 120i in FIG. 1), a ship, a robot, a robot arm, a sensor, a perceptron, a smart home device (for example, 120h in FIG. 1), or the like.

A specific technology and a specific device form that are used by the terminal are not limited in this application. It should be understood that in this application, "sending information/data to... (for example, a terminal)" may be understood as that a destination end of the information is the terminal, and directly or indirectly sending the information/data to the terminal may be included. "Receiving information/data from... (a terminal)" may be understood as that a source end of the information is the terminal, and directly or indirectly receiving the information/data from the terminal may be included. Necessary processing, for example, a format change, may be performed on the information/data between the source end and the destination end for information/data sending. However, the destination end may understand valid information from the source end. A similar expression in this application may be understood similarly, and details are not described herein again.

In this application, "sending information/data" indicates only a direction of information/data transmission, including direct sending through an air interface, and also including indirect sending by a processing unit through the air interface. "Sending" may also be understood as "output" of an interface module. "Receiving information/data" indicates only the direction of information/data transmission, including direct reception through the air interface, and also including indirect reception by the processing unit through the air interface. "Receiving" may also be understood as "input" of the module interface.

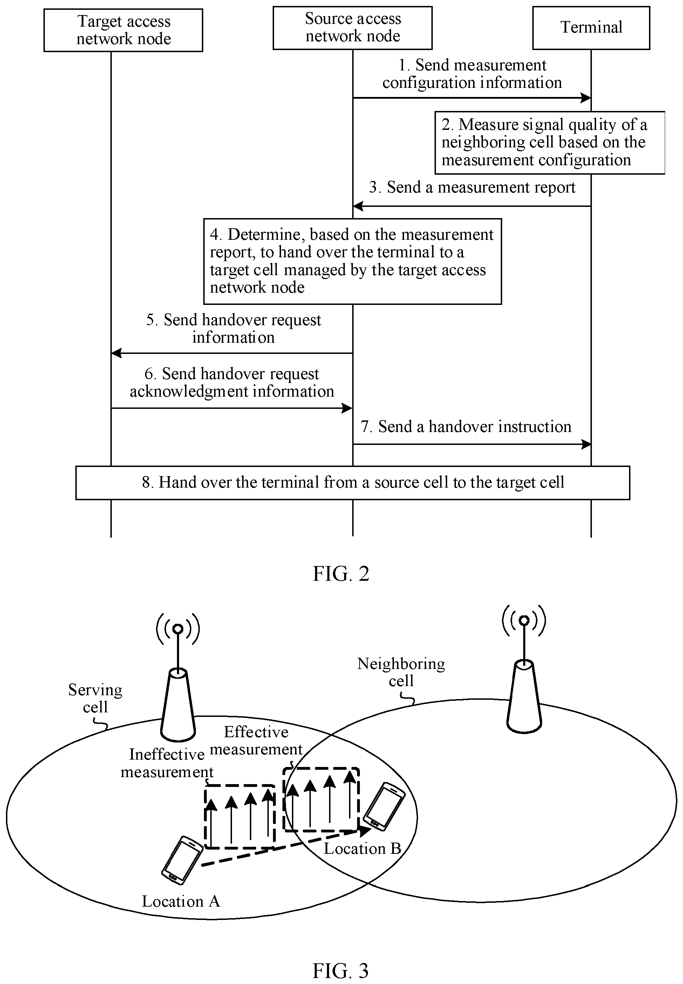

FIG. 2 is a diagram of a current measurement-based cell handover procedure. As shown in FIG. 2, the procedure includes but is not limited to the following steps.
1. A source access network node sends measurement configuration information to a terminal.

The source access network node, as a terminal, is an access network node that provides a communication service for the terminal, and sends the measurement configuration information to the terminal, where the measurement configuration information is used to configure the terminal to measure signal quality of a neighboring cell.

2. The terminal measures the signal quality of the neighboring cell based on the measurement configuration information.

The source access network node configures, for the terminal by using the measurement configuration information, a periodicity of measuring the signal quality of the neighboring cell. After receiving the measurement configuration information, the terminal periodically measures the signal quality of the neighboring cell based on the measurement configuration information.

3. The terminal sends a measurement report to the source access network node.

The terminal obtains a measurement result after measuring the signal quality of the neighboring cell, where the measurement report includes the measurement result obtained by the terminal through measurement. In a manner, the source access network node may configure, by using the measurement configuration information, the terminal to periodically send the measurement report to the source access network node. The terminal may periodically report the measurement result to the source access network node by using the measurement report based on duration of the periodicity configured by the source access network node. In another manner, the source access network node may configure event-triggered measurement result reporting for the terminal by using the measurement configuration information. For example, when a measurement result corresponding to an event meets a measurement reporting condition, the terminal sends the measurement report to the source access network node, where the measurement report includes the measurement result that meets the reporting condition.

4. The source access network node determines, based on the measurement report, to hand over the terminal to a target cell managed by a target access network node.

5. The source access network node sends handover request information to the target access network node.

The handover request information is used to request to hand over the terminal to the target cell of the target access network node.

6. The target access network node sends handover request acknowledgment information to the source access network node.

When the target access network node determines that the terminal is handed over to the target cell, the target access network node sends the handover request acknowledgment information to the source access network node, where the handover request acknowledgment information is used to acknowledge that the terminal can be handed over to the target cell.

7. The source access network node sends a handover command to the terminal.

After receiving the handover request acknowledgment information from the target access network node, the source access network node acknowledges that the target access network node agrees to hand over the terminal to the target cell. In this case, the source access network node sends the handover command to the terminal, to indicate to hand over the terminal to the target cell.

8. Hand over the terminal from a source cell to the target cell. The target cell serves as a serving cell to provide a network communication service for the terminal.

It can be learned from the foregoing descriptions that after the network device configures the terminal to measure the neighboring cell, the terminal periodically measures the signal quality of the neighboring cell. However, measuring the neighboring cell by the terminal at a location where signal quality of the serving cell is good does not trigger handover, and is ineffective measurement. As shown in FIG. 3, the terminal has a specific moving speed, and the terminal periodically measures the neighboring cell based on the measurement configuration information. The terminal performs measurement for a plurality of times when moving from a location A to a location B. A part of the measurement is ineffective measurement, and only measurement of the signal quality of the neighboring cell in an overlapping area between the serving cell and the neighboring cell is effective measurement, and may trigger handover. The ineffective measurement performed by the terminal causes unnecessary power consumption of the terminal. If a reporting manner of the measurement result is periodic reporting, the unnecessary power consumption of the terminal and a waste of radio resources are further increased.

For the foregoing problems, in embodiments of this application, a network device notifies a terminal of an effective time period of measurement configuration, and the terminal may temporarily not measure signal quality of a neighboring cell after receiving measurement configuration information, but measure the signal quality within the effective time period. This can reduce power consumption of the terminal and improve efficiency of measuring the signal quality of the neighboring cell. Specifically, the network device may determine, based on prior information in a serving cell, the effective time period for the terminal to measure the neighboring cell, to notify the terminal of the effective time period of the measurement configuration.

The communication method provided in embodiments of this application is described by using an example in which the network device and the terminal are used as execution entities of an interaction illustration. However, the execution entities of the interaction illustration are not limited in this application. Functions/steps implemented by the network device in the method provided in embodiments of this application may alternatively be implemented by a module (for example, a chip, a chip system, or a processor) used in the network device, or may be implemented by a logical node, a logical module, or software that can implement all or a part of functions of the network devices. Functions/steps implemented by the terminal in the method provided in embodiments of this application may alternatively be implemented by a module (for example, a chip, a chip system, or a processor) used in the terminal, or may be implemented by a logical node, a logical module, or software that can implement all or a part of functions of the terminal.

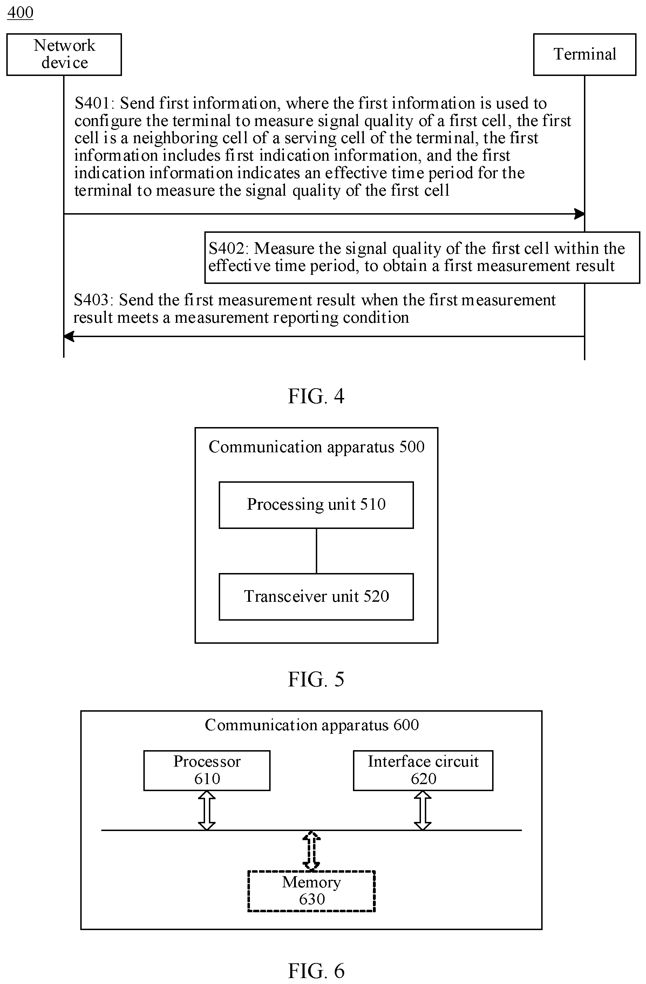

FIG. 4 is a schematic flowchart of a communication method 400 according to an embodiment of this application. The method 400 includes but is not limited to the following S401 to S403.

S401: A network device sends first information to a terminal, where the first information is used to configure the terminal to measure signal quality of a first cell, the first cell is a neighboring cell of a serving cell of the terminal, the first information includes first indication information, and the first indication information indicates an effective time period for the terminal to measure the signal quality of the first cell.

Correspondingly, the terminal receives the first information from the network device, determines, based on the first information, to measure the signal quality of the first cell, and determines, based on the first indication information, the effective time period for measuring the signal quality of the first cell.

The network device may determine, based on prior information in the serving cell, the effective time period for the terminal to measure the first cell, and notify, by using the first information, the terminal of the effective time period for measuring the signal quality of the first cell, so that the terminal measures the signal quality of the first cell within the effective time period indicated by the network device, thereby reducing unnecessary power consumption caused by the terminal measuring the signal quality of the first cell in another time period.

In an implementation, the network device inputs information about the terminal into an intelligent model, to obtain the effective time period, output by the intelligent model, for the terminal to measure the first cell. The information about the terminal may include but is not limited to one or more of location information, movement direction information, or speed information of the terminal.

For example, the network device may obtain one or more of the location information, the movement direction information, or the speed information of the terminal from the terminal. Alternatively, the network device may determine a location of the terminal based on a direction of a downlink beam for communication between the network device and the terminal. Alternatively, the network device may determine a speed and/or a moving direction of the terminal based on a reference signal received from the terminal. This is not limited in this application.

Specifically, the network device may obtain, by using an artificial intelligence (artificial intelligence, AI) technology through inference of the intelligent model, the effective time period for the terminal to measure the signal quality of the first cell. For example, the intelligent model may obtain, through inference by using the information about the terminal as an input, the effective time period for the terminal to measure the signal quality of the first cell. The intelligent model may be obtained by the network device from a network side (for example, may be obtained from a core network device or an operation, administration and maintenance (operation, administration and maintenance, OAM) device). Alternatively, the network device may use, as training data, information about a large quantity of terminals and measurement results of the terminals that are obtained in the serving cell, and train a model to obtain the intelligent model.

The first information may be specifically used to configure the terminal to measure signal quality of at least one neighboring cell of the serving cell, the at least one neighboring cell includes the first cell, and the effective time period indicated by the first indication information in the first information may be a common effective time period of the at least one neighboring cell. Alternatively, the first information may include indication information corresponding to each of the at least one neighboring cell, and indication information corresponding to one neighboring cell indicates an effective time period for the terminal to measure signal quality of the neighboring cell. The following separately describes the two implementations.

In an implementation, the effective time period is the common effective time period for the terminal to measure the signal quality of the at least one neighboring cell.

For example, the first information is measurement configuration information sent by the network device to the terminal, and the measurement configuration information is used to configure the terminal to measure the signal quality of the at least one neighboring cell. The measurement configuration information includes the first indication information, and the effective time period indicated by the first indication information is the common effective time period that corresponds to the at least one neighboring cell and that is indicated by the measurement configuration information. For example, the measurement configuration information may be denoted as MeasConfig, and a format of the measurement configuration information MeasConfig may be represented as follows:

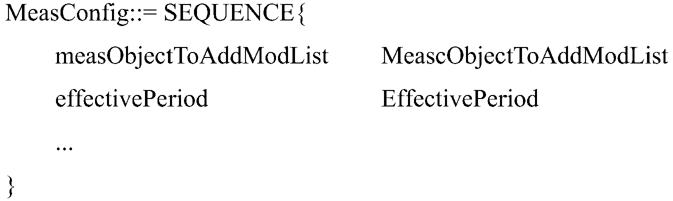

The measurement configuration information MeasConfig includes measurement object list information measObjectToAddModList, and measObjectToAddModList may be used to configure, for the terminal based on MeascObjectToAddModList, the at least one neighboring cell whose signal quality needs to be measured. The measurement configuration information MeasConfig further includes the first indication information, that is, effectivePeriod. An effective time period configured based on effectivePeriod is the common effective time period that corresponds to the at least one neighboring cell and that is configured based on the measurement object information measObjectToAddModList. The terminal may measure the signal quality of the at least one neighboring cell within the common effective time period based on the common effective time period indicated by the measurement configuration information.

It should be noted that "..." in the format of MeasConfig indicates that the measurement configuration information may further include another information, for example, a specific measurement parameter type of signal quality that needs to be measured, for example, one or more measurement parameter types of a reference signal received power (reference signal received power, RSRP), a signal to interference plus noise ratio (signal to interference plus noise ratio, SINR), and a received signal strength indicator (received signal strength indication, RSSI). This is not limited in this application. The measurement configuration information may be carried in radio resource control (radio resource control, RRC) reconfiguration information.

In another implementation, the first information includes at least one piece of measurement object information, the at least one piece of measurement object information indicates the at least one neighboring cell of the serving cell, and the first indication information is specifically included in measurement object information indicating the first cell.

For example, the first information is the measurement configuration information MeasConfig, and the measurement object list information measObjectToAddModList in the measurement configuration information may specifically include the at least one piece of measurement object information, where the measurement object information may be denoted as MeasObject. For example, a format of one piece of measurement object information MeasObject may be represented as follows:

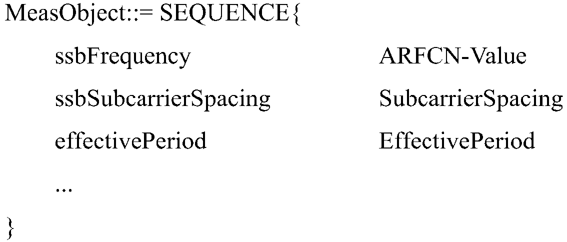

For example, the measurement object information is used to configure the first cell, where the measurement object information includes effective time information effectivePeriod, and an effective time period configured based on effectivePeriod is the effective time period for the terminal to measure the first cell. If the measurement configuration information is further used to configure the terminal to measure another cell, an effective time period for the terminal to measure the another cell is configured based on measurement configuration information corresponding to the cell.

The network device may configure the terminal to specifically measure a synchronization signal block (synchronization signal block, SSB) of the neighboring cell to obtain the signal quality of the neighboring cell. In this case, the measurement object information may include frequency information ssbFrequency of the SSB of the neighboring cell and subcarrier spacing information ssbSubcarrierSpacing of the SSB. The frequency information ssbFrequency indicates an absolute radio frequency channel number (absolute radio frequency channel number, ARFCN) value (denoted as ARFCN-Value) to notify the terminal of a frequency band in which the SSB of the neighboring cell is located. The subcarrier spacing information ssbSubcarrierSpacing indicates, by using SubcarrierSpacing, a subcarrier spacing used for the SSB. In this way, the terminal can detect, based on the measurement object information, the SSB of the neighboring cell on the frequency band in which the SSB of the neighboring cell is located, to measure the signal quality. "..." in the measurement object information MeasObject indicates that the measurement object information may further include another information. This is not limited in this application.

Manners in which the first indication information indicates the effective time period may include but are not limited to the following.

In an implementation, the first indication information indicates a correspondence between a plurality of speeds and a plurality of candidate time periods. The terminal may determine the effective time period based on the speed of the terminal and the correspondence. The effective time period is a candidate time period that corresponds to the speed of the terminal and that is in the plurality of candidate time periods.

For example, a plurality of speed grades may be predefined. For example, three speed grades, indicating a high speed, a medium speed, and a low speed, respectively corresponding to three speed ranges may be predefined. The network device may indicate, by using the first indication information, an effective time period corresponding to each speed grade. For example, effective time periods corresponding to the three speed grades indicated by the first indication information may be represented as follows:
- If a speed grade indicates the high speed, an effective time period is [t11, t12].
- If a speed grade indicates the medium speed, an effective time period is [t21, t22].
- If a speed grade indicates the low speed, an effective time period is [t31, t32].

After receiving the first information, the terminal may determine, based on a speed grade of the speed of the terminal, the effective time period for measuring the first cell. For example, if the speed grade of the speed of the terminal indicates the low speed, the terminal may determine that the effective time period is [t31, t32], and the terminal measures the signal quality of the first cell within the effective time period [t31, t32]. Specifically, the effective time period may be the common effective time period that is for the terminal to measure the signal quality of the at least one neighboring cell and that is configured by the network device. The network device may configure, based on a relative location between the terminal and a cell and the measurement object information, a correspondence between a plurality of speeds of each cell and candidate time periods for the terminal. The terminal may determine, based on the speed of the terminal, an effective time period for measuring each neighboring cell.

In another implementation, the first indication information indicates a start time unit of the effective time period and a quantity of time units included in the effective time period. Alternatively, the first indication information indicates a quantity N of time units, the start time unit of the effective time period is a time unit after the N time units starting from a time unit that carries the first information, and N is a positive integer.

In this implementation, the terminal may specifically determine, based on the first indication information, the start time unit of the effective time period and a quantity of time units included in the effective time period, to specifically determine the effective time period. However, this application is not limited thereto. The first indication information may further indicate the start time unit and an end time unit of the effective time period, or the time unit carrying the first information is the start time unit of the effective time period by default. The first indication information further indicates the end time unit of the effective time period. For example, the time unit may be a time domain symbol, a time domain symbol group, a slot, a subframe, or a frame.

S402: The terminal measures the signal quality of the first cell within the effective time period, to obtain a first measurement result.

For example, the first information may further indicate a measurement parameter type for the terminal to measure the first cell, for example, the RSRP. The terminal measures a signal (the SSB or the reference signal) of the first cell within the effective time period based on the first information, to obtain an RSRP of the signal. The first measurement result may include the RSRP. The measurement parameter type may alternatively be an SINR, an RSSI, or another parameter type, or a plurality of measurement parameter types may be configured for the first information. This is not limited in this application.

S403: The terminal sends the first measurement result to the network device when the first measurement result meets a measurement reporting condition.

The first information sent by the network device to the terminal may further include the measurement reporting condition. After obtaining the first measurement result, the terminal determines whether the first measurement result meets the measurement reporting condition. The terminal sends the first measurement result to the network device when the first measurement result meets the measurement reporting condition. Correspondingly, the network device receives the first measurement result from the terminal, and determines, based on the first measurement result, whether the terminal needs to be handed over to the first cell.

Optionally, the first measurement result further includes one or more of time information, speed information, or location information used when the terminal measures the signal quality of the first cell.

The network device receives the first measurement result, and updates, based on the first measurement result, a model parameter of the intelligent model used to infer the effective time period of the first cell. Specifically, the network device may consider that the first measurement result is an accurate measurement result obtained by the intelligent model through inference, and update the intelligent model based on the first measurement result, so that accuracy of the effective time period that corresponds to the neighboring cell of the serving cell and that is obtained by the intelligent model through inference can be improved.

In an implementation, the first information is used to configure the terminal to measure the signal quality of the at least one neighboring cell. The network device may consider that if a measurement result of a part of the at least one neighboring cell is received, an effective time period, for measurement, that corresponds to the part of the neighboring cell and that is obtained by the intelligent model through inference is accurate. On the contrary, for a neighboring cell that is in the at least one neighboring cell and in which corresponding measurement result is not reported by the terminal, the network device may consider that accuracy of an effective time period of the neighboring cell obtained by the intelligent model through inference is low, and the network device may adjust the model parameter of the intelligent model, to improve accuracy of the effective time that corresponds to the neighboring cell and that is obtained by the intelligent model through inference.

In another implementation, the at least one neighboring cell in which the terminal is configured, by using the first information, to measure the signal quality further includes a second cell, and the terminal further sends second information to the network device, where the second information indicates that the second cell does not meet the measurement reporting condition. Correspondingly, the network device receives the second information from the terminal, and updates the model parameter of the intelligent model based on the second information.

After the terminal measures the signal quality of the at least one neighboring cell configured by the network device, the terminal may report, to the network device, a neighboring cell that does not meet the measurement reporting condition.

Optionally, the second information may indicate a specific reason why the second cell does not meet the measurement reporting condition. For example, the second information may indicate that the terminal does not obtain, through measurement, signal quality of the second cell within an effective time period corresponding to the second cell. Alternatively, the terminal measures the signal quality of the second cell within the effective time period corresponding to the second cell, to obtain a second measurement result, but the second measurement result does not meet the measurement reporting condition. The second information may indicate the second measurement result.

The network device may consider, based on the second information, that accuracy of the effective time period, for measurement, that corresponds to the second cell and that is obtained by the intelligent model through inference is low, and the network device may update the model parameter of the intelligent model based on the second information, to improve accuracy of the effective time period that corresponds to the neighboring cell and that is obtained by the intelligent model through inference.

The first measurement result and the second information may be separately sent by the terminal to the network device, or the first measurement result and the second information may be sent by the terminal to the network device together. For example, the terminal sends measurement result information to the network device, and the measurement result information may include the first measurement result and the second information. This is not limited in this application.

According to the foregoing solution, the network device notifies the terminal of the effective time period of measurement configuration, and the terminal may temporarily not measure the signal quality of the neighboring cell after receiving the measurement configuration information, but measure the signal quality within the effective time period. In comparison with a case in which the terminal starts to periodically perform measurement after receiving the measurement configuration information, in this case, power consumption of the terminal can be reduced, and efficiency of measuring the signal quality of the neighboring cell can be improved. Specifically, the network device may determine, based on the prior information in the serving cell, the effective time period for the terminal to measure the neighboring cell. For example, the effective time period for the terminal to measure the signal quality of the neighboring cell is determined by using the AI technology, so that the effective time period for the terminal to measure the signal quality of the neighboring cell can be accurately obtained through inference. In addition, the network device may update the model parameter of the intelligent model based on a measurement result of the signal quality of the neighboring cell obtained from the serving cell, so that the network device can adaptively adjust the intelligent model in real time, thereby improving accuracy of the effective time period, for measurement, that corresponds to the neighboring cell and that is obtained by the intelligent model through inference.

In an optional implementation, if the terminal obtains, through measurement beyond the effective time period, for measurement, that corresponds to the neighboring cell, a neighboring cell whose signal quality meets the measurement reporting condition, the terminal may report, to the network device, time information for obtaining a signal of the neighboring cell through measurement. Optionally, the terminal may further report a measurement result of signal quality of the neighboring cell to the network device. The network device may update the model parameter of the intelligent model based on the time information and the like reported by the terminal. This implementation can help the network device maintain the intelligent model, and improve accuracy of the effective time period, for measurement, that corresponds to the neighboring cell and that is obtained by the intelligent model through inference.

It may be understood that, to implement functions in the foregoing embodiments, the access network node and the terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 5 and FIG. 6 are diagrams of structures of possible communication apparatuses according to embodiments of this application. These communication apparatuses may be configured to implement functions of the terminal or the network device in the foregoing method embodiments. Therefore, beneficial effects of the foregoing method embodiments can also be implemented. In embodiments of this application, the communication apparatus may be one of the terminals 120a to 120j as shown in FIG. 1, or the access network node 110a or 110b as shown in FIG. 1, or a module (for example, a chip or a system on chip) used in the terminal or the network device.

The communication apparatus 500 includes a transceiver unit 520, and the transceiver unit 520 may be configured to receive or send information. The communication apparatus 500 may further include a processing unit 510, and the processing unit 510 may be configured to process instructions or data, to implement a corresponding operation.

It should be further understood that, when the communication apparatus 500 is a chip configured in (or used in) a communication device, the transceiver unit 520 in the communication apparatus 500 may be an input/output interface or a circuit of the chip, and the processing unit 510 in the communication apparatus 500 may be a processor in the chip.

Optionally, the communication apparatus 500 may further include a storage unit 530. The storage unit 530 may be configured to store instructions or data. The processing unit 510 may execute the instructions or the data stored in the storage unit, to cause the communication apparatus to implement a corresponding operation.

The communication apparatus 500 may be configured to implement functions of a first communication apparatus or a second communication apparatus in the method embodiment shown in FIG. 4.

When the communication apparatus 500 is configured to implement functions of the first communication apparatus in the method embodiment shown in FIG. 4, the transceiver unit 520 is configured to receive first information, where the first information is used to configure a terminal to measure signal quality of a first cell, the first cell is a neighboring cell of a serving cell of the terminal, the first information includes first indication information, and the first indication information indicates an effective time period for the terminal to measure the signal quality of the first cell. The processing unit 510 is configured to measure the signal quality of the first cell within the effective time period, to obtain a first measurement result. The transceiver unit 520 is configured to send the first measurement result when the first measurement result meets a measurement reporting condition.

When the communication apparatus 500 is configured to implement functions of an access network node in the method embodiment shown in FIG. 4, the processing unit 510 is configured to determine the first information, where the first information is used to configure the terminal to measure the signal quality of the first cell, the first cell is the neighboring cell of the serving cell of the terminal, the first information includes the first indication information, and the first indication information indicates the effective time period for the terminal to measure the signal quality of the first cell; and the transceiver unit 520 is configured to send the first information. The transceiver unit 520 is further configured to receive the first measurement result, where the first measurement result includes the signal quality of the first cell that is obtained by the terminal through measurement.

For more detailed descriptions of the processing unit 510 and the transceiver unit 520, refer to related descriptions in the method embodiment shown in FIG. 4.

It should be understood that, the transceiver unit 520 in the communication apparatus 500 can be implemented by using a communication interface (for example, a transceiver, a transceiver circuit, an input/output interface, or a pin). When the communication interface is a transceiver, the transceiver may include a receiver and/or a transmitter. The processing unit 510 in the communication apparatus 500 may be implemented by using at least one processor. The processing unit 510 in the communication apparatus 500 may alternatively be implemented by using at least one logic circuit. Optionally, the communication apparatus 500 further includes a storage unit, and the storage unit may be implemented by using a memory.

As shown in FIG. 6, a communication apparatus 600 includes a processor 610 and an interface circuit 620. The processor 610 and the interface circuit 620 are coupled to each other. It may be understood that the interface circuit 620 may be a transceiver or an input/output interface. Optionally, the communication apparatus 600 may further include a memory 630, configured to store instructions executed by the processor 610, input data needed by the processor 610 to run the instructions, or data generated after the processor 610 runs the instructions.

In an implementation, the memory 630 may alternatively be integrated into the processor 610, or may be independent of the processor 610.

When the communication apparatus 600 is configured to implement the method shown in FIG. 4, the processor 610 is configured to implement functions of the processing unit 510, and the interface circuit 620 is configured to implement functions of the transceiver unit 520.

When the communication apparatus is a chip used in a terminal device, the chip of the terminal device can implement the functions of the terminal in the foregoing method embodiments. The chip in the terminal device receives information from another module (for example, a radio frequency module or an antenna) in the terminal device, where the information is sent by the access network node to the terminal device. Alternatively, the chip in the terminal device sends information to another module (for example, a radio frequency module or an antenna) in the terminal device, where the information is sent by the terminal device to the access network node.

When the communication apparatus is a module used in the network device, the module in the network device can implement the functions of the access network node in the foregoing method embodiments. The module in the network device receives information from another module (for example, a radio frequency module or an antenna) in the access network node, where the information is sent by the terminal device to the access network node; or the module in the network device sends information to another module (for example, a radio frequency module or an antenna) in the access network node, where the information is sent by the access network node to the terminal device. The module in the network device herein may be a baseband chip of the access network node, or may be a DU or another module. The DU herein may be a DU in an open radio access network (open radio access network, O-RAN) architecture.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logical device, a transistor logical device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random-access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in an access network device or the terminal device. The processor and the storage medium may alternatively exist in the access network device or the terminal device as discrete components.

According to the methods provided in embodiments of this application, an embodiment of this application further provides a computer program product. The computer program product includes computer program code. When the computer program code is executed by one or more processors, an apparatus including the processor is caused to perform the method shown in FIG. 4.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus.

According to the methods provided in embodiments of this application, an embodiment of this application further provides a computer-readable storage medium, and the computer-readable storage medium stores the computer program or the instructions. When the computer program or the instructions are run by one or more processors, an apparatus including the processor is caused to perform the method shown in FIG. 4.

The computer program or the instructions may be stored in the computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

According to the methods provided in embodiments of this application, an embodiment of this application further provides a communication system, including the foregoing one or more terminals. The system may further include the foregoing one or more access network nodes.

In the several embodiments provided in this application, it should be understood that the disclosed system, apparatus, and method may be implemented in other manners. For example, the described apparatus is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected based on actual requirements to achieve the objectives of the solutions.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first information, wherein the first information is used to configure a terminal to measure signal quality of a first cell, the first cell is a neighboring cell of a serving cell of the terminal, the first information comprises first indication information, and the first indication information indicates an effective time period for the terminal to measure the signal quality of the first cell;
measuring the signal quality of the first cell within the effective time period, to obtain a first measurement result; and
sending the first measurement result when the first measurement result meets a measurement reporting condition.

2. The method according to claim 1, wherein the first indication information indicates a correspondence between a plurality of speeds and a plurality of candidate time periods, and the method further comprises:
determining the effective time period based on a speed of the terminal and the correspondence, wherein the effective time period is a candidate time period that corresponds to the speed of the terminal and that is in the plurality of candidate time periods.

3. The method according to claim 1 or 2, wherein the first indication information indicates a start time unit of the effective time period and a quantity of time units comprised in the effective time period; or the first indication information indicates a quantity N of time units, the start time unit of the effective time period is a time unit after the N time units starting from a time unit that carries the first information, and N is a positive integer.

4. The method according to any one of claims 1 to 3, wherein the first information is specifically used to configure the terminal to measure signal quality of at least one neighboring cell of the serving cell, the at least one neighboring cell comprises the first cell, and the effective time period is a common effective time period for the terminal to measure the signal quality of the at least one neighboring cell.

5. The method according to any one of claims 1 to 3, wherein the first information comprises at least one piece of measurement object information, the at least one piece of measurement object information indicates at least one neighboring cell of the serving cell, the at least one neighboring cell comprises the first cell, and the first indication information is specifically comprised in measurement object information indicating the first cell.

6. The method according to claim 4 or 5, wherein the at least one neighboring cell further comprises a second cell, and the method further comprises:
sending second information, wherein the second information indicates that the second cell does not meet the measurement reporting condition.

7. The method according to claim 6, wherein the second information indicates that the terminal does not obtain, through measurement, signal quality of the second cell within an effective time period corresponding to the second cell; or the second information indicates a second measurement result, and the second measurement result comprises the signal quality of the second cell that is obtained by the terminal through measurement.

8. The method according to any one of claims 1 to 7, wherein the first measurement result further comprises one or more of time information, speed information, or location information used when the terminal measures the signal quality of the first cell.

9. A communication method, comprising:
sending first information, wherein the first information is used to configure a terminal to measure signal quality of a first cell, the first cell is a neighboring cell of a serving cell of the terminal, the first information comprises first indication information, and the first indication information indicates an effective time period for the terminal to measure the signal quality of the first cell; and
receiving a first measurement result, wherein the first measurement result comprises the signal quality of the first cell that is obtained by the terminal through measurement.

10. The method according to claim 9, wherein the first indication information indicates a correspondence between a plurality of speeds and a plurality of candidate time periods, and the plurality of candidate time periods comprise the effective time period corresponding to a speed of the terminal.

11. The method according to claim 9 or 10, wherein the first indication information indicates a start time unit of the effective time period and a quantity of time units comprised in the effective time period; or the first indication information indicates a quantity N of time units, the start time unit of the effective time period is a time unit after the N time units starting from a time unit that carries the first information, and N is a positive integer.

12. The method according to any one of claims 9 to 11, wherein the first information is specifically used to configure the terminal to measure signal quality of at least one neighboring cell of the serving cell, the at least one neighboring cell comprises the first cell, and the effective time period is a common effective time period for the terminal to measure the signal quality of the at least one neighboring cell.

13. The method according to any one of claims 9 to 11, wherein the first information comprises at least one piece of measurement object information, the at least one piece of measurement object information indicates at least one neighboring cell of the serving cell, the at least one neighboring cell comprises the first cell, and the first indication information is specifically comprised in the measurement object information indicating the first cell.

14. The method according to claim 12 or 13, wherein the method further comprises:
inputting information about the terminal into an intelligent model, to obtain the effective time period, output by the intelligent model, for the terminal to measure the at least one neighboring cell, wherein
the information about the terminal comprises one or more of location information, movement direction information, or speed information of the terminal.

15. The method according to claim 14, wherein the at least one neighboring cell comprises a second cell, and the method further comprises:
receiving second information from the terminal, wherein the second information indicates that the second cell does not meet a measurement reporting condition; and
updating a model parameter of the intelligent model based on the second information.

16. The method according to claim 15, wherein the second information indicates that the terminal does not obtain, through measurement, signal quality of the second cell within an effective time period corresponding to the second cell; or the second information indicates a second measurement result, and the second measurement result comprises the signal quality of the second cell that is obtained by the terminal through measurement.

17. The method according to any one of claims 9 to 16, wherein the first measurement result further comprises one or more of time information, speed information, or location information used when the terminal measures the signal quality of the first cell; and the method further comprises:
updating the model parameter of the intelligent model based on the first measurement result, wherein the intelligent model is used to infer an effective time period for the terminal to measure the neighboring cell of the serving cell.

18. A communication apparatus, comprising a processor, wherein the processor is configured to execute a computer program stored in a memory, to cause the communication apparatus to perform the method according to any one of claims 1 to 8, or perform the method according to any one of claims 9 to 17.

19. The apparatus according to claim 18, wherein the processor comprises the memory.

20. A communication apparatus, comprising: a logic circuit and a communication interface, wherein the logic circuit is configured to process to-be-processed information to obtain processed information, and the communication interface is configured to obtain the to-be-processed information and/or output the processed information, to cause the communication apparatus to perform the method according to any one of claims 1 to 8, or perform the method according to any one of claims 9 to 17.

21. A computer-readable storage medium, wherein the computer-readable storage medium stores a computer program, and when the computer program runs, the method according to any one of claims 1 to 8 is implemented, or the method according to any one of claims 9 to 17 is implemented.

22. A communication system, comprising a communication apparatus configured to perform the method according to any one of claims 1 to 8 and a communication apparatus configured to perform the method according to any one of claims 9 to 17.
